# EUROPEAN PATENT APPLICATION

(11) **EP 4 265 486 A1**
(43) Date of publication of application: **25.10.2023**
(21) Application number: 22168921.9
(22) Date of filing: 20.04.2022
(51) Int. Cl.: B60S 1/56

(54) **CLEANING DEVICE FOR A DETECTION SYSTEM OF A MOTOR VEHICLE**

(71) Applicant: Valeo Systèmes d'Essuyage, 78322 Le Mesnil Saint Denis (FR)
(72) Inventor: BUTE, Radu-George, BIETIGHEIM-BISSINGEN (DE); CHABANNES, Benjamin, Issoire (FR); KUCHLY, Nicolas, Issoire (FR)
(74) Representative: Valeo Visibility

(57) **Abstract**

The present invention relates to a cleaning device (100) for a detecting system in a vehicle, the detecting system comprising an optical surface (105) to be cleaned, wherein the cleaning device (100) comprises a blower for generating a flow of air, and an air conveying part in communication with the blower, wherein the air conveying part comprises an output nozzle (110) to disperse the flow of air along the optical surface (105), where the output nozzle (110) is arranged such that the air flowing out from the output nozzle (110) is tangential to the optical surface (105).

## Description

### TECHNICAL FIELD

The present invention relates to the field of the detection systems intended for a motor vehicle, in particular for their application in driving assistance devices. It relates more particularly to a device for cleaning such detection systems.

### STATE OF THE ART

Motor vehicles are equipped with detection systems to collect information related to the environment of the motor vehicle, in particular in order to provide the driver with assistance in the driving and/or the maneuvering of this vehicle. For instance, cameras or other sensors, such as infrared image sensors, are increasingly incorporated into modern vehicles to provide additional information to the driver.

To this end, the detection system is commonly installed on the vehicle in such a way as to collect information on the environment in front, on the environment to the rear and on the environment to the sides of the vehicle. The detection system is therefore conventionally installed on the front face and/or on the rear face and/or on a rear-view mirror of the vehicle.

The detection systems may be exposed to the fouling as from dirty water, dust or other types of sprays. Conventional cleaning devices are adapted to clean the detection systems to reduce or eliminate the build-up of obstructive debris on the optical surface of the detection system. Some techniques adapted by the conventional cleaning devices to clean the optical surfaces include ejecting a stream of fluid (water/compressed air) over the surface to be cleaned through a nozzle. However, such devices are not effective in completely removing the debris, water droplets etc., as the fluid is directed above the level of debris, water droplets etc. Accordingly, it would be desirable to improve the efficiency of the cleaning devices.

Further, in some conventional techniques, movement of the nozzle(s) may be controlled to direct the fluid at the level of debris, water droplets etc. on the optical surface. For instance, the movement of the nozzles may be controlled by a motor or the like. Hence, existing techniques may employ controllers and motor(s), for example, electronic servo motors, to control the movement of the nozzle. Thus, conventional cleaning devices may be complex and costly. It would be desirable to devise a cleaning technique without the use of the motor and other electronic controllers.

### SUMMARY OF THE INVENTION

An object of the invention is to alleviate the problems raised by the prior arts. To be more precise, an object of the invention is to provide a cleaning device, which can effectively remove substances, for instance, water droplets, deposited on an optical surface of a detection system of a motor vehicle.

Another object of the present invention is to provide a cleaning device in which an optical surface of an optical detection system extends from an output nozzle so that the flow of air flowing out from the output nozzle is tangential to the optical surface, thereby improving the efficiency of cleaning the optical surface.

To achieve these objectives, the present invention provides a cleaning device for a detecting system of a motor vehicle, the detecting system comprising an optical surface to be cleaned. The cleaning device comprises a blower for generating a flow of air, and an air conveying part in communication with the blower. The air conveying part comprises an output nozzle to disperse the flow of air along the optical surface. The output nozzle is arranged such that the air flowing out from the output nozzle is tangential to the optical surface. Thus, the flow of air on the optical surface is at the level of water droplets and this ensures effective cleaning of the optical surface, without using additional components. Further, unlike the conventional techniques, the present invention avoids the usage of motors to control the movement of the nozzle(s) to perform the effective cleaning of the optical surface. Further, with the proposed invention, it is possible to minimize a vertical velocity component of the flow of air and maximize a horizontal velocity component of the flow of air. That is to say, the flow of air that would be directed parallel to the plane of the optical surface can be maximized and the flow of air that would be incident on the optical surface at different incident angles can be minimized. This results in directing the flow of air at the level of water droplets on the optical surface, and makes the cleaning operation more efficient.

According to a characteristic of the present invention, the air conveying part comprises an input nozzle in connection with the blower, and a fan arranged to direct the air from the input nozzle to the output nozzle, which includes a pair of parallel walls extending from its downstream end to its upstream end. The output nozzle may be arranged on one of the edges of a front face of a sensor housing.

According to a characteristic of the present invention, a first end of the optical surface is disposed in the output nozzle at the upstream end and aligned with one of its walls at the upstream end to form a continuous portion with the wall. Thus, it avoids any interruptions in the air flow that is directed towards the optical surface. In one aspect, a portion of the optical surface is formed with the output nozzle such that the flow of air is tangential to the optical surface.

According to a characteristic of the present invention, the first end of the optical surface is of a curved shape. For instance, the first end of the optical surface may be slanted or curved to receive the first end of the optical surface in a slot provided on the output nozzle, thereby forming a continuous portion with the wall of the output nozzle.

According to a characteristic of the present invention, a second end opposite to the first end of the optical surface is fixed to a body of the optical detecting system.

According to a characteristic of the present invention, the first end of the optical surface is fixed with the output nozzle by one or more of: a mechanical fixation means, glue, and adhesive tape. This fixation of the optical surface with the output nozzle ensures to form a continuous portion with the wall of the output nozzle. In one aspect, the optical surface and the output nozzle may be formed as separate components and assembled together to form the continuous portion. In another aspect, the optical surface and the output nozzle may be formed as a single component such that the flow of air is tangential to the optical surface.

According to a characteristic of the present invention, the substance comprises one or more water droplets.

According to a characteristic of the present invention, the water droplets are either of same sizes or of different sizes.

According to a characteristic of the present invention, the air conveying part is made of plastic material.

According to a characteristic of the present invention, the output nozzle is arranged to be in contact with any one of the sides of the optical surface.

According to a characteristic, the present invention relates to a detection system comprising at least one sensor including an optical surface to be cleaned, and a cleaning device as has just been described previously.

According to a characteristic, the present invention is also related to a motor vehicle equipped with the detection system as has just been presented.

Further advantages, features and details of the invention will be apparent from the following description of preferred embodiments of the invention and from the drawings.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Fig.1a shows a perspective view of a portion of a cleaning device for cleaning an optical surface of a detection system of a motor vehicle, according to an embodiment of the present invention.
Fig.1b shows a side view of the portion of the cleaning device shown in Fig.1a, according to an embodiment of the present invention.
Fig.2a shows a perspective view of an output nozzle of the cleaning device shown in Fig.1a, according to an embodiment of the present invention.
Fig.2b shows a side view of the output nozzle of Fig.2a, according to an embodiment of the present invention.
Fig.3a shows a flow of air that is guided onto an optical surface of a sensor of a detection system, according to an embodiment of the present invention.
Fig.3b shows a sectional view of a portion of the cleaning device shown in Fig.1a, according to an embodiment of the present invention.
Fig.4 shows a perspective view of an exemplary motor vehicle equipped with an optical detection system and an associated cleaning device, according to an embodiment of the present invention.

### DETAILED DESCRIPTION OF THE INVENTION

The description set forth below in connection with the appended drawings is intended as a description of various embodiments of the disclosed subject matter and is not necessarily intended to represent the only embodiment(s).ln certain instances, the description includes specific details for the purpose of providing an understanding of the disclosed subject matter. However, it will be apparent to those skilled in the art that embodiments may be practiced without these specific details. In some instances, well known structures and components may be shown in block diagram form in order to avoid obscuring the concepts of the disclosed subject matter.

Reference throughout the specification to "one embodiment" or "an embodiment" means that a particular feature, structure, characteristic, operation, or function described in connection with an embodiment is included in at least one embodiment of the disclosed subject matter. Thus, any appearance of the phrases "in one embodiment" or " in an embodiment" in the specification is not necessarily referring to the same embodiment. Further, the particular features, structures, characteristics, operations, or functions may be combined in any suitable manner in one or more embodiments. Further, it is intended that embodiments of the disclosed subject matter can and do cover modifications and variations of the described embodiments.

It should also be noted that, in the following description, the designations "upstream" and "downstream" refer to the direction of flow of the fluids whether they are cleaning or drying fluids, in the cleaning device according to the invention. Thus, the designation "upstream" refers to the side of the device according to the invention through which these fluids are admitted into it, and the designation "downstream" refers to the side of the device according to the invention through which the fluids are dispensed out of it, in particular toward an optical surface of a detection system of a motor vehicle.

Motor vehicles are equipped with detection systems to collect information on the environment of the motor vehicle, in particular in order to provide the driver with assistance in the driving and/or the maneuvering of this vehicle. It will be appreciated that, without departing from the scope of the invention, the motor vehicle may include a number of sensors, devices, and/or systems that are capable of assisting in driving operations. Examples of the various sensors and systems may include, but are in no way limited to, one or more of cameras (e.g., independent, stereo, combined image, etc.), infrared (IR) sensors, radio frequency (RF) sensors, ultrasonic sensors (e.g., transducers, transceivers, etc.), RADAR sensors (e.g., object-detection sensors and/or systems), LIDAR systems, odometry sensors and/or devices (e.g., encoders, etc.), orientation sensors (e.g., accelerometers, gyroscopes, magnetometer, etc.), navigation sensors and systems (e.g., GPS, etc.), and other ranging, imaging, and/or object-detecting sensors. The sensors may be disposed in an interior space of the vehicle and/or on an outside of the vehicle. In some embodiments, the sensors and systems may be disposed in one or more portions of a vehicle (e.g., the frame, a body panel, a compartment, etc.).

The optical detection systems equipped to the motor vehicle may be exposed to the fouling as from dirty water, dust or other types of sprays. The present invention is directed to provide a cleaning device which can effectively remove substances, for instance, water droplets, deposited on an optical surface of a sensor of a detection system of a vehicle.

Referring now to the drawings, wherein like reference numerals designate identical or corresponding parts throughout the several views. Hereinafter, exemplary embodiments of the present disclosure will be described in detail based on the drawings.

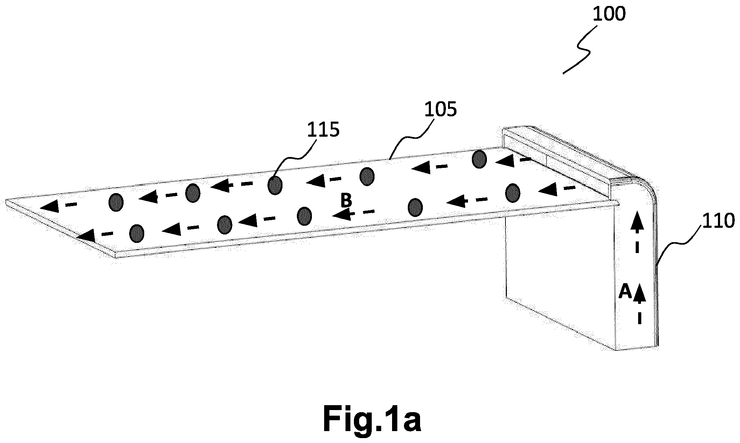

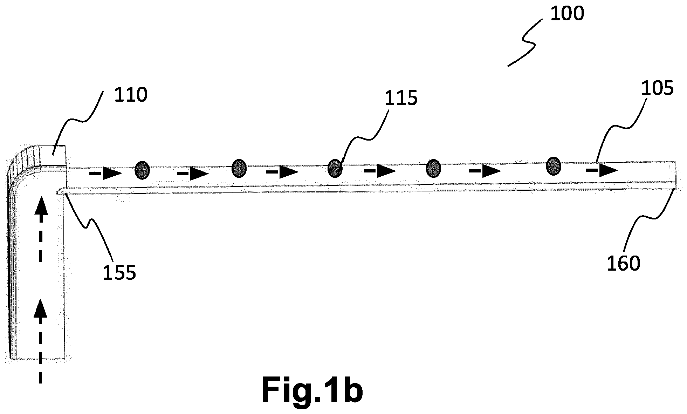

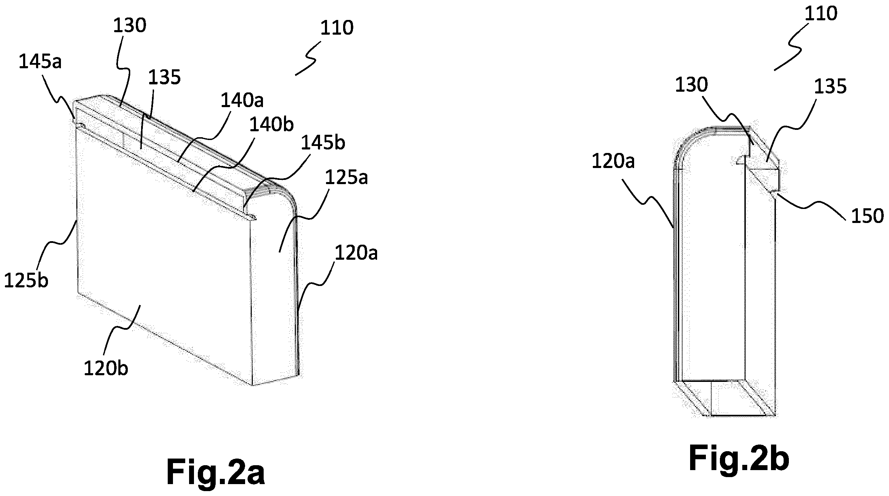

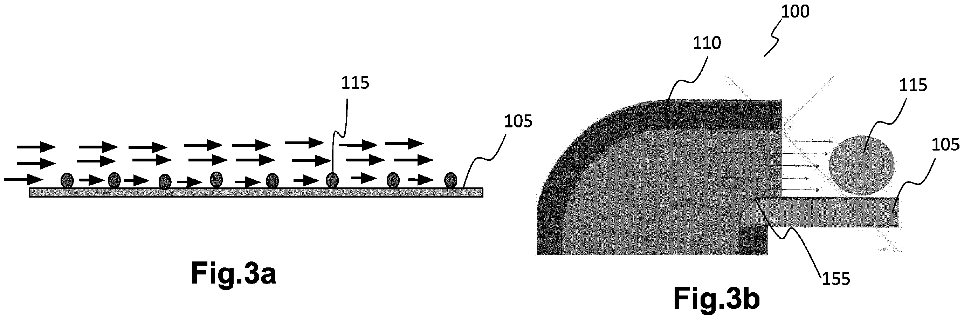

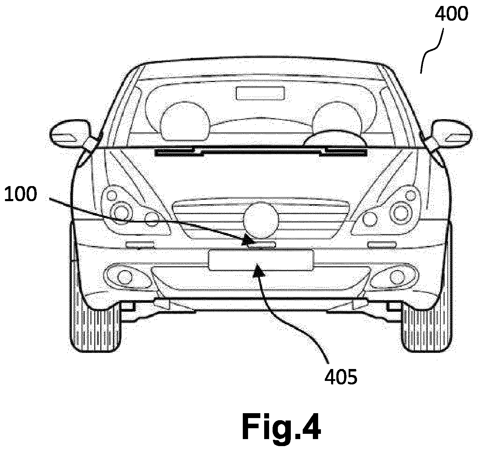

Fig.1a shows a perspective view of a portion of a cleaning device for cleaning an optical surface of a detection system of a motor vehicle, according to an embodiment of the present invention. Fig.1b shows a side view of the portion of the cleaning device shown in Fig.1a, according to an embodiment of the present invention. Fig.2a shows a perspective view of an output nozzle of the cleaning device shown in Fig.1a, according to an embodiment of the present invention. Fig.2b shows a side view of the output nozzle of Fig.2a, according to an embodiment of the present invention. Fig.3a shows flow of air that is guided onto an optical surface of a sensor of a detection system, according to an embodiment of the present invention. Fig.3b shows a sectional view of a portion of the cleaning device shown in Fig.1a, according to an embodiment of the present invention. Fig.4 shows a perspective view of an exemplary motor vehicle equipped with an optical detection system and an associated cleaning device, according to an embodiment of the present invention.

Referring to Fig.1a and Fig.1b, the cleaning device for a detecting system of a motor vehicle is provided according to an embodiment of the present invention. The detecting system (not shown in Figures) comprises a sensor that is adapted to collect information about the vehicle's environment is accommodated within a sensor housing (not shown in Figures), and the sensor is provided with an optical surface 105. The sensor housing may enclose the sensor in a hermetic and sealed manner. The optical surface 105 is generally configured as rectangle delimited by four edges. Note that inside the planes in which the four edges extend, the edges are either rectilinear or curvilinear, in particular in an arc.

To effectively remove the substances deposited on the optical surface 105, the cleaning device 100 is proposed in this embodiment. According to this embodiment, the cleaning device 100 comprises an air conveying part having at least an input nozzle (not shown in Figures), a fan (not shown in Figures), and an output nozzle 110. For instance, the air conveying part is made of plastic material.

In an aspect, the output nozzle 110 may be arranged on one of the edges of a front face of the sensor housing. It should be noted that only a portion of the cleaning device 100 is shown in the Fig.1a and Fig.1b for the purpose of discussion and in order better to illustrate the present invention. Fig.1a and Fig.1b illustrates the portion of the cleaning device 100 in which the optical surface 105 arranged in proximity to the output nozzle 110, which is adapted to direct the flow of air onto the optical surface 105 to effectively remove the substance deposited on the optical surface. For instance, the substance comprising one or more water droplets 115, which are either of same sizes or of different sizes.

Fig.2a and Fig.2b illustrate the structure of output nozzle 110 of the cleaning device 100, according to the embodiment of the present invention. The output nozzle 110 is arranged such that the flow of air flowing out from the output nozzle 110 is tangential to the optical surface 105. As can be seen from the Fig.2a and the Fig.2b, the output nozzle 110 includes a pair of parallel walls 120a, 120b extending longitudinally from its downstream end to its upstream end. The upstream end may be arranged substantially perpendicular to the downstream end. The pair of parallel walls 120a, 120b may be connected by two opposite sidewalls 125a, 125b, as shown in Fig.2a and Fig.2b to define an air passage channel. The downstream end of the output nozzle 110 may be arranged to be in communication with the fan or the input nozzle. Additionally, the upstream end of the output nozzle 110 may be dimensioned to be curved. In other words, it is understood that, a top wall 130 of the output nozzle 110 and a first wall 120a of the pair of parallel walls 120a, 120b may be joined together in a curved manner. It is understood to a person skilled in the art that the output nozzle can be dimensioned in different ways based on the requirements and space availability.

Further, the output nozzle 110 may be formed with an outlet portion 135, which is positioned downwardly from the top wall 130 and aligned in line with a second wall 120b of the pair of parallel walls 120a, 120b. Further, the outlet portion 135 is an aperture through which the flow of air is directed over the optical surface 110, as shown in Fig.3b.

Referring back to Fig.2a, according to an embodiment of the present invention, the outlet portion 135 is delimited by four edges, including two longitudinal edges such as a first longitudinal edge 140a and a second longitudinal edge 140b and two lateral edges such as first lateral edge 145a and a second lateral edge 145b. The first lateral edge 145a and the second lateral edge 145b projects downwardly from the first longitudinal edge 140a at its longitudinal ends. In other words, it is understood that the first longitudinal edge 140a, the first lateral edge 145a, and the second lateral edge 145b forms a U-shape, as can be seen from Fig.2a.

In one aspect, a portion of the optical surface 105 is formed with the output nozzle 110 such that the flow of air on the optical surface 105 is tangential to the optical surface 105, as shown in Fig.3a and Fig.3b. The outlet portion 135 of the output nozzle 110 may be formed with a slot 150 to receive a first end 155 (shown in Fig. 2b) of the optical surface 105, and a second end 160 (shown in Fig. 1b) opposite to the first end 155 of the optical surface 105 may be fixed to a body of the detecting system. In an embodiment, the slot 150 may be formed below the first and second lateral edges 145a, 145b and above the second longitudinal edge 140b, as can be seen in Fig.2a and Fig.2b. The first end 155 of the optical surface 105 may be disposed of in the output nozzle 110 at its upstream end and aligned with one of its walls 120a, 120b at the upstream end to form a continuous portion with the wall 120a. This is clearly seen in Fig.3b. For instance, the first end 155 of the optical surface 105 may be slanted or curved to accommodate the first end 155 of the optical surface 105 in the slot 150 provided on the outlet portion 135 of the output nozzle 110, thereby forming a continuous portion with the wall 120a of the output nozzle 110. This arrangement ensures that the air flowing out from the output nozzle 110 is tangential to the optical surface 105. Further, it is understood to a person skilled in the art that the slot 150 and the first end 155 of the optical surface 105 can be dimensioned in such a way that the slot 150 is adapted to receive the first end 155 of the optical surface 105. The first end 155 of the optical surface 105 may be fixed to the slot 150 of the output nozzle 110 at least by one of: a mechanical fixation means, glue, and adhesive tape. This fixation of the optical surface 105 with the output nozzle 110 ensures to form a continuous portion with the wall 120a of the output nozzle 110, as can be seen in Fig.3b. Thus, it avoids any interruptions in the air flow that is directed towards the optical surface. Further, it is understood that the direction of the flow of air that exits the outlet portion 135 is substantially perpendicular to the direction of the flow of air that enters the output nozzle 110.

In one embodiment, the output nozzle 110 and the optical surface 105 may be formed as a single component. Advantageously, with this embodiment, a compact cleaning device can be realised and additionally it ensures efficient shaping of the flow of air because of the continuity of the surface from the interior of the output nozzle 110 to the optical surface 105. In another embodiment, the output nozzle 110 and the optical surface 105 may be formed as different components and assembled together. Advantageously, with this embodiment, the cleaning device 100 can be more flexible in terms of configuration.

The cleaning device 100 further comprises a blower (not shown in Figures) for generating the flow of air and the air conveying part arranged to be in communication with the blower. The output nozzle 110 may be arranged to receive the flow of air from the input nozzle and guided to disperse the flow of air linearly across the optical surface105 through the outlet portion 135 to remove substances deposited on the optical surface 105. In other words, the output nozzle 110 is arranged to disperse the flow of air parallel to the plane of the optical surface 110 as can be seen in Fig.3a. That is to say, the air flowing out from the output nozzle 110 is tangential to the optical surface 105, as can be seen from Fig.3a and Fig.3b.

In operation, the flow of air is drawn from the supply source, for instance a blower (not shown in Figures), and guided towards the downstream end of the output nozzle 110 via the input nozzle. From the downstream end of the output nozzle, the flow of air is guided towards the outlet portion 135 in a direction 'A' as shown in the Fig.1b, and from the outlet portion 135, the flow of air is directed onto the optical surface 110 along direction 'B', which is substantially perpendicular to the direction 'A'. As previously discussed, as the portion of the optical surface 105 is formed with the output nozzle 110, the flow of air directed onto the optical surface 105 is tangential to the optical surface 105, thereby effectively removing the substance deposited on the optical surface 105.

Thus, in accordance with the arrangement of the present invention, the flow of air on the optical surface 105 is at the level of water droplets 115, which ensures effective cleaning of the optical surface 105, without using additional components. Further, unlike the conventional techniques, the present invention avoids the usage of motors to control the movement of the nozzle(s) to perform the effective cleaning of the optical surface 110. In addition, with the proposed invention, it is possible to minimize a vertical velocity component of the flow of air and maximize a horizontal velocity component of the flow of air. That is to say, the flow of air that would be directed parallel to the optical surface 105 can be maximized and the flow of air that would be incident on the optical surface 105 at different incident angles can be minimized. This results in maximising the flow of air at the level of water droplets on the optical surface 105, and it makes the cleaning operation more efficient.

According to one characteristic of the present invention, the present invention is also related to a motor vehicle equipped with the detection system as has just been presented. As can be seen from the Fig.4, the motor vehicle 400 is equipped with a detecting system 405 which includes the cleaning device 100 as discussed in previous embodiments. Although the front face of the motor vehicle shown in the Fig.4 is provided with the detection system 405, it is understood to a person skilled in the art that the detection system 405 can be provided on other faces of the vehicle. For instance, the detection system 405 may be provided on at least one of: a vehicle front, vehicle aft or rear, vehicle roof, at least one vehicle side, a vehicle undercarriage, and a vehicle interior. Further, in Fig.4, although shown in the form of a car, it should be appreciated that the vehicle described herein may include any conveyance or model of a conveyance, where the conveyance was designed for the purpose of moving one or more tangible objects, such as people, animals, cargo, and the like. The term "vehicle" does not require that a conveyance moves or is capable of movement. Typical vehicles may include but are in no way limited to cars, trucks, motorcycles, buses, automobiles, trains, railed conveyances, boats, ships, marine conveyances, submarine conveyances, airplanes, space craft, flying machines, human-powered conveyances, and the like.

The invention being thus described, it will be obvious that the same may be varied in many ways. Such variations are not to be regarded as a departure from the spirit and scope of the invention, and all such modifications as would be obvious to one skilled in the art are intended to be included in the scope of the invention.

## Claims

1. A cleaning device (100) for a detecting system in a vehicle, the detecting system comprising an optical surface (105) to be cleaned, wherein the cleaning device (100) comprises a blower for generating a flow of air, and an air conveying part in communication with the blower, wherein the air conveying part comprises an output nozzle (110) to disperse the flow of air along the optical surface (105), **characterized in that** the output nozzle (110) is arranged such that the air flowing out from the output nozzle (110) is tangential to the optical surface (105).

2. The cleaning device (100) as claimed in claim 1, wherein the air conveying part comprises an input nozzle in connection with the blower, and a fan arranged to direct the air from the input nozzle to the output nozzle (110), which includes a pair of parallel walls (120a, 120b) extending from its downstream end to its upstream end.

3. The cleaning device (100) as claimed in any one of preceding claims, wherein a first end (155) of the optical surface (105) is disposed in the output nozzle (110) at the upstream end and aligned with one of its walls (120a, 120b) at the upstream end to form a continuous portion with the wall (120a).

4. The cleaning device (100) as claimed in claim 3, wherein the first end (155) of the optical surface (105) is of a curved shape.

5. The cleaning device (100) as claimed in claim 3, wherein a second end (160) opposite to the first end (155) of the optical surface (105) is fixed to a body of the detecting system.

6. The cleaning device (100) as claimed in claim 3, wherein the first end (155) of the optical surface (105) is fixed with the output nozzle by one or more of: mechanical fixation means, glue, and adhesive tape.

7. The cleaning device as claimed in claim 1, wherein the air conveying part is made of plastic material.

8. The cleaning device as claimed in claim 1, wherein the output nozzle (110) is arranged to be in contact with any one of the sides of the optical surface (105).

9. A detecting system (405) comprising a cleaning device (100) according to any one of the preceding claims.

10. A motor vehicle (400) equipped with the optical detection system (405) as claimed in claim 9.
